# EUROPÄISCHE PATENTSCHRIFT

(11) **EP 0 965 774 B1**
(45) Veröffentlichungstag und Bekanntmachung des Hinweises auf die Patenterteilung: **10.04.2002**
(21) Anmeldenummer: 99111048.7
(22) Anmeldetag: 14.06.1999
(51) Int. Cl.: F16H 57/02, B61C 9/12

(54) **Triebwagen-Antrieb**
Railway vehicle drive
Dispositif de propulsion de véhicule ferroviaire

(30) Priorität: 20.06.1998 DE 19827580
(43) Veröffentlichungstag der Anmeldung: 22.12.1999
(73) Patentinhaber: ZF FRIEDRICHSHAFEN Aktiengesellschaft, 88038 Friedrichshafen (DE)
(72) Erfinder: Strehler, Richard, 88085 Langenargen (DE); Bartl, Max, 80993 München (DE)

(56) Entgegenhaltungen:
- DE-A- 3 211 621
- DE-C- 903 094
- US-A- 2 977 820

## Beschreibung

Die Erfindung betrifft einen Triebwagen-Antrieb nach dem Oberbegriff von Anspruch 1, der als bekannt gelten kann.

Bei dieselmotorisch angetriebenen Triebwagen für Schienenfahrzeuge treibt in der Regel eine Hubkolbenbrennkraftmaschine über ein Schaltgetriebe, Gelenkwellen und ein Achsgetriebe ein oder mehrere Fahrzeugachsen an. Die Hubkolbenbrennkraftmaschine und das Schaltgetriebe sind in Längsrichtung des Triebwagens, quer zu den Fahrzeugachsen angeordnet. Die Achsgetriebe umfassen eine Kegelradstufe, der häufig eine weitere Getriebestufe zugeordnet ist, z. B. in Form eines schaltbaren Wendegetriebes. Das Achsgetriebe mit dem Wendegetriebe bildet eine komplexe Getriebeeinheit, die zum größten Teil bei jeder neuen Anwendung komplett neu konstruiert bzw. neu überarbeitet und erprobt werden muß. Hinzu kommt, daß die bekannten Getriebeeinheiten außen liegende Schalteinrichtungen haben, deren Gestänge, elektrische Schalter usw. durch Umwelteinflüsse in ihrer Funktion negativ beeinflußt werden. Zu den wesentlichen Einflüssen gehören im Winter Eis und Schnee, die am betriebswarmen Getriebe tauen und nach dem Abkühlen an dem Gestänge bzw. den Schaltern gefrieren. Ferner kann zusätzlich während der ganzen Jahreszeit Bremssand zu Verschleiß an den Dichtungen, Zylindern und Gelenken führen.

Es ist aus der DE-OS 23 26 146 ein aus verschiedenen Elementen bestehender Bausatz zum wahlweisen Zusammenbau verschiedener schaltbarer Zwischengetriebe, insbesondere Übertragungsgetriebe bei Fahrzeugen und fahrbaren Maschinen bekannt. Aus dem Bausatz sollen einfache bis zu komplizierte Getriebe zusammengesetzt werden, die an den jeweiligen Anwendungsfall leicht anpaßbar und für eine große Anzahl unterschiedlicher Fahrzeuge geeignet sind. Ferner soll die Möglichkeit gegeben sein, verschiedene Antriebe und Abtriebe anzuordnen und auf die Wellenenden der Antriebe und Abtriebe wahlweise Kupplungsscheiben mit oder ohne Schaltelemente, mit oder ohne Anschluß für einen Tachometer oder Zähler anzuordnen oder diese durch einen Deckel zu schützen. Der Bausatz umfaßt universelle, aufeinander abgestimmte Getriebeelemente, die in vielfältiger Weise und zahlreichen Kombinationen zusammengesetzt werden können. Dadurch können zwar aus den Standardelementen Getriebe mit einer Vielzahl von Funktionen zusammengestellt werden, jedoch ist nicht gewährleistet, daß sich die so ergebenden Getriebe in den zur Verfügung stehenden Bauraum eines Fahrzeugs einfügen lassen.

Die **DE-A-32 11 621** offenbart einen Antrieb für einen Gelenkomnibus mit einer Hubkolbenbrennkraftmaschine, die über ein Schaltgetriebe, eine Gelenkwelle und eine an einem Achsgetriebe angeordnete Getriebestufe eine Fahrzeugachse antreibt, wobei die Getriebestufe als separate Baueinheit am Achsgetriebegehäuse angeflanscht ist und auf ihrer Abtriebswelle ein in das Achsgetriebegehäuse hineinragendes Kegelrad des Achsgetriebes trägt.

Der Erfindung liegt die Aufgabe zugrunde, einen Triebwagen-Antrieb zu entwickeln, der mit wenig Aufwand an die jeweiligen Anwendungsfälle angepaßt werden kann. Sie wird gemäß der Erfindung durch die Merkmale des Anspruchs 1 gelöst. Weitere Ausgestaltungen ergeben sich aus den Unteransprüchen.

Nach der Erfindung wird das Wendegetriebe, das dem Achsgetriebe zugeordnet ist, als separates Bauteil am Achsgetriebe angeflanscht, wobei das Wendegetriebe auf seiner Abtriebswelle ein in das Achsgetriebegehäuse hineinragendes Kegelrad des Achsgetriebes trägt. Durch die Teilung des Achsgetriebes von dem schaltbaren Wendegetriebe wird kein größerer Bauraum beansprucht, so daß die beiden Baueinheiten für die gleichen Anwendungsfälle der bisherigen, komplexen Getriebeeinheiten geeignet sind. Gleichzeitig ist es aber möglich, ohne großen Aufwand, das schaltbare Wendegetriebe in Bezug auf das Leistungsvermögen der Hubkolbenbrennkraftmaschine und des Schaltgetriebes auszulegen, während das Achsgetriebe im wesentlichen bezüglich der fahrzeugspezifischen Gegebenheiten dimensioniert werden kann. Die fahrzeugspezifischen Gegebenheiten sind vor allem die Achsenlast und der Raddurchmesser, der Achsdurchmesser, der Bauraum und die Bodenfreiheit sowie die Anordnung einer Drehmomentstütze.

Zweckmäßigerweise wird das schaltbare Wendegetriebe auf der Seite des Achsgetriebegehäuses angeordnet und an einer im wesentlichen vertikalen, achsparallelen Trennfläche an das Achsgetriebegehäuse angeflanscht, die von der Hubkolbenbrennkraftmaschine und dem Schaltgetriebe abgewandt ist. Dabei wird das Schaltgetriebe über eine Gelenkwelle mit einer Eingangswelle der Getriebestufe verbunden. Die Gelenkwelle ist an der Fahrzeugachse vorbeigeführt, und zwar in der Regel oberhalb der Fahrzeugachse.

Die Trennfläche zwischen dem Achsgetriebegehäuse und dem Getriebegehäuse des Wendegetriebes liegt etwa im Bereich des äußeren Umfangs eines mit der Fahrzeugachse umlaufenden Kegelrads, das mit dem Kegelrad auf der Abtriebswelle des Wendegetriebes kämmt. Somit wird der Bauraum optimal genutzt und es ist die Kombination verschiedener Baugruppen über einen großen Leistungsbereich möglich. Dadurch ergeben sich für viele verschiedene Anwendungsfälle eine große Anzahl von gleichen Teilen, so daß die Entwicklungszeiten und Entwicklungskosten für Anpassungskonstruktionen sowie die Durchlaufzeiten und Lieferzeiten stark reduziert werden können. Für neue Anwendungen resultieren daraus geringe Anlaufkosten.

Bei Anwendungsfällen, z. B. wenn eine zweite Fahrzeugachse von einer ersten Fahrzeugachse angetrieben wird, kann für die zweite Achse die Getriebestufe entfallen und statt derer an die Trennfläche des zweiten Achsgetriebegehäuses ein Lagergehäuse für das in das Achsgetriebegehäuse hineinragende Kegelrad vorgesehen werden. Die Abtriebswelle des Wendegetriebes, das dem ersten Achsgetriebe zugeordnet ist, besitzt in vorteilhafter Weise einen Flansch, der über eine Gelenkwelle mit einer Kegelradwelle der zweiten Fahrzeugachse verbunden ist.

In vorteilhafter Weise besitzt das Wendegetriebe zwei Eingangszahnräder, von denen das erste auf einem Lagerstutzen des Wendegetriebegehäuses und das zweite mit einem axialen Abstand zum ersten auf einem Lagerstutzen eines Gehäusedeckels des Wendegetriebegehäuses gelagert ist. Das von der Fahrzeugachse entferntere Eingangszahnrad kämmt mit einem Zahnrad auf der Abtriebswelle. So kann das Wendegetriebe nah an die Fahrzeugachse herangerückt werden, indem die Eingangszahnräder den oberhalb des größten Durchmessers des Achsgetriebes liegenden freien Bauraum teilweise nutzen. Zwischen den Eingangszahnrädern ist eine Kupplungseinrichtung vorgesehen, die drehfest mit der Eingangswelle verbunden ist, und über die die Eingangswelle mit einem der Eingangszahnräder kuppelbar ist. Eine elektrische oder hydraulische Schalteinrichtung betätigt die Kupplungseinrichtung. Sie ist im Lagerstutzen des Gehäusedeckels oder des Wendegetriebegehäuses untergebracht, um sie vor Umwelteinflüssen zu schützen.

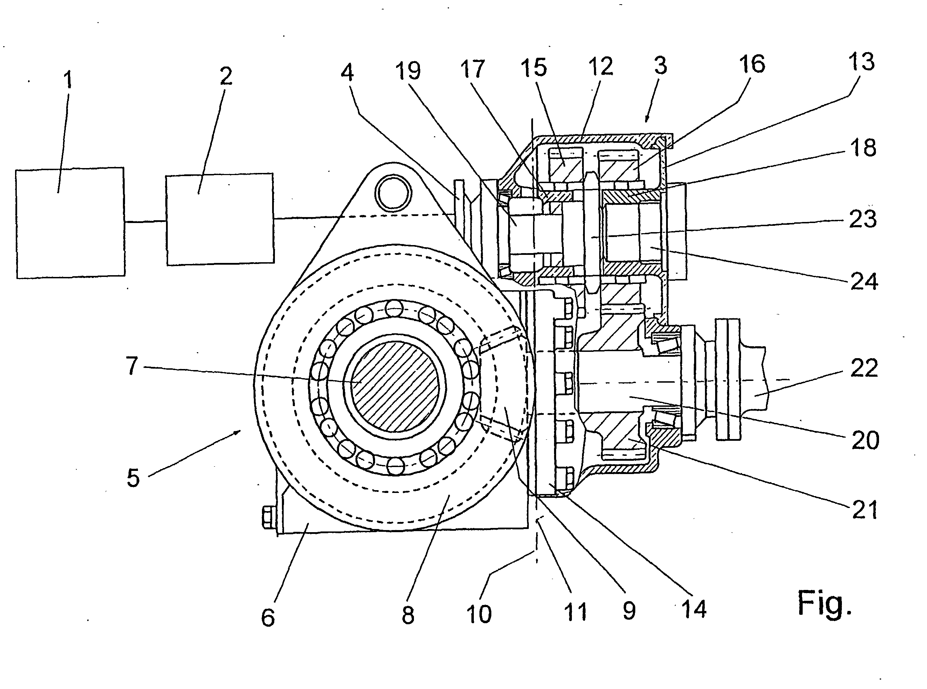

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, sofern sie im Rahmen der Ansprüche liegen.

Die einzige Figur zeigt eine schematische Darstellung eines erfindungsgemäßen Antriebs mit einem teilweisen Schnitt durch ein Wendegetriebe mit einem Achsgetriebe.

Eine Hubkolbenbrennkraftmaschine 1, die in der Regel nach dem Dieselprinzip arbeitet, treibt über ein Schaltgetriebe 2 und eine Gelenkwelle 4 ein Wendegetriebe 3 an. Dabei ist die Gelenkwelle 4 mit einer Eingangswelle 19 des Wendegetriebes 3 verbunden, die im Wendegetriebegehäuse 12 drehbar gelagert ist und eine Kupplungseinrichtung 23 trägt.

Das Wendegetriebegehäuse 12 ist durch einen Gehäusedeckel 13 verschlossen. Auf einem Lagerstutzen 17 des Getriebegehäuses 12 ist ein erstes Eingangszahnrad 15 mittels Wälzlager drehbar gelagert, während ein zweites Eingangszahnrad 16 mit einem axialen Abstand auf einem Lagerstutzen 18 des Gehäusedeckels 13 durch Wälzlager gelagert ist. Dieses Eingangszahnrad 16, das von einer Fahrzeugachse 7 weiter entfernt ist als das Eingangszahnrad 15, kämmt mit einem mit einer Abtriebswelle 20 drehfest verbundenen Zahnrad 21. Das Eingangszahnrad 15 ist über eine Zwischenradwelle (nicht dargestellt) in trieblicher Verbindung mit dem Zahnrad 21.

Das Wendegetriebegehäuse 12 besitzt einen Flansch 14, mit dem es an einer Trennfläche 11 eines Achsgetriebegehäuses 6 angeflanscht ist. Die Trennfläche 11 verläuft in einer senkrechten Trennebene 10 achsparallel zu der Fahrzeugachse 7, die im Achsgetriebegehäuse 6 eines Achsgetriebes 5 gelagert ist und ein Kegelrad 8 trägt. Dieses kämmt mit einem Kegelrad 9, das auf der Abtriebswelle 20 des Wendegetriebes 3 sitzt und über den Flansch 14 hinaus in das Achsgetriebegehäuse 6 hineinragt. Mit dem freien Ende der Abtriebswelle 20 kann über eine weitere Gelenkwelle 22 eine weitere Fahrzeugachse angetrieben werden.

Die Kupplungseinrichtung 23 schaltet das Wendegetriebe 3. Sie ist zwischen den Eingangszahnrädern 15, 16 angeordnet und wird durch eine Schalteinrichtung 24 betätigt. Die Kupplungseinrichtung 23 umfaßt in der Regel eine Schaltmuffe, die drehfest aber axial verschiebbar auf der Eingangswelle 19 geführt ist, während die Schalteinrichtung 24 als pneumatische/hydraulische Schalteinrichtung ausgebildet sein kann mit einem in einem Schaltzylinder geführten Kolben, der über eine Kolbenstange und ein darauf sitzendes Axiallager auf die Schiebemuffe wirkt, wobei der Kolben über eine federbelastete Mittelstellung verfügt. Für die konkrete Ausgestaltung der Schalteinrichtung 24 und der Kupplungseinrichtung 23 gibt es zahlreiche Lösungsmöglichkeiten, die nicht dargestellt und nicht Gegenstand der vorliegenden Erfindung sind.

Nach der Erfindung ist die Schalteinrichtung 24, gleichgültig ob sie elektrisch, pneumatisch oder hydraulisch wirkt, in einem der Lagerstutzen 17 oder 18 des Gehäusedeckels 13 oder des Wendegetriebegehäuses 12 untergebracht. Dadurch ist sie zum einen gegenüber Umwelteinflüssen sicher geschützt und zum anderen beansprucht sie keinen über die Kontur des Wendegetriebes 3 hinausgehenden Bauraum.

Das Wendegetriebe 3 ist in Vorgelegebauweise dargestellt. Es sind aber auch Getriebestufen in Planetenbauweise geeignet. Ferner können die Zahnräder je nach Erfordernissen eine geeignete Verzahnung aufweisen, z. B. eine Gradverzahnung, Schrägverzahnung, Bogenverzahnung oder dergleichen.

### Bezugszeichen

- 1: Hubkolbenbrennkraftmaschine
- 2: Schaltgetriebe
- 3: Wendegetriebe
- 4: Gelenkwelle
- 5: Achsgetriebe
- 6: Achsgetriebegehäuse
- 7: Fahrzeugachse
- 8: Kegelrad
- 9: Kegelrad
- 10: Trennebene
- 11: Trennfläche
- 12: Wendegetriebegehäuse
- 13: Gehäusedeckel
- 14: Flansch
- 15: erstes Eingangszahnrad
- 16: zweites Eingangszahnrad
- 17: Lagerstutzen
- 18: Lagerstutzen
- 19: Eingangswelle
- 20: Abtriebswelle
- 21: Zahnrad
- 22: Gelenkwelle
- 23: Kupplungseinrichtung
- 24: Schalteinrichtung

## Patentansprüche

1. Triebwagen-Antrieb mit einer Hubkolbenbrennkraftmaschine (1), die über ein Schaltgetriebe (2), eine Gelenkwelle (4) und ein an einem Achsgetriebe (5) angeordnetes schaltbares wendegetriebe (3) eine Fahrzeugachse (7) antreibt, **dadurch gekennzeichnet, daß** das Wendegetriebe (3) als separate Baueinheit am Achsgetriebegehäuse (6) angeflanscht ist und auf seiner Abtriebswelle (20) ein in das Achsgetriebegehäuse (6) hineinragendes Kegelrad (9) des Achsgetriebes (5) trägt.

2. Antrieb nach Anspruch 1, **dadurch gekennzeichnet, daß** die Gelenkwelle (4) an der Fahrzeugachse (7) vorbei geführt und mit einer Eingangswelle (19) des Wendegetriebes (3) verbunden ist, dessen Getriebegehäuse (12) auf der dem Schaltgetriebe (2) abgewandten Seite der Fahrzeugachse (7) an einer im wesentlichen vertikalen, achsparallelen Trennfläche des Achsgetriebegehäuses (6) angeflanscht ist.

3. Antrieb nach Anspruch 1 oder 2, **dadurch gekennzeichnet, daß** ein erstes Eingangszahnrad (15) des Wendegetriebes (3) auf einem Lagerstutzen (17) des Wendegetriebegehäuses (12) und ein zweites Eingangszahnrad (16) des Wendegetriebes (3) mit einem axialen Abstand zum ersten auf einem Lagerstutzen (18) eines Gehäusedeckels (13) des Wendegetriebegehäuses (12) gelagert ist, wobei zwischen den Eingangszahnrädern (15, 16) eine Kupplungseinrichtung (23) vorgesehen ist, durch die jeweils ein Eingangszahnrad (15, 16) des Wendegetriebes (3) mit dessen Eingangswelle (19) kuppelbar ist und die von einer elektrischen, pneumatischen oder hydraulischen Schalteinrichtung (24) betätigt wird.

4. Antrieb nach Anspruch 3, **dadurch gekennzeichnet, daß** die Schalteinrichtung (24) im Lagerstutzen (18) des Gehäusedeckels (13) oder im Lagerstutzen (17) des Wendegetriebegehäuses (12) untergebracht ist.

5. Antrieb nach einem der Ansprüche 3 oder 4, **dadurch gekennzeichnet, daß** die Kupplungseinrichtung (23) eine Schaltmuffe umfaßt, die drehfest, aber axial verschiebbar auf der Eingangswelle (19) geführt ist und von einem in einem Schaltzylinder geführten Kolben über eine Kolbenstange und ein darauf sitzendes Axiallager betätigt wird, wobei der Kolben über eine federbelastete Mittelstellung verfügt.

6. Antrieb nach einem der vorhergehenden Ansprüche, **dadurch gekennzeichnet, daß** jede Schaltstellung mechanisch verriegelt ist und elektrisch über berührungslose Sensoren erfaßt wird.

7. Antrieb nach einem der vorhergehenden Ansprüche, **dadurch gekennzeichnet, daß** die Abtriebswelle (20) des Wendegetriebes (3) über eine Gelenkwelle (22) mit einem Achsgetriebe einer weiteren Fahrzeugachse verbindbar ist.

## Claims

1. Railcar drive comprising a reciprocating internal combustion engine (1), which via a shift transmission (2), a propeller shaft (4) and a shiftable reversing gear (3) disposed on an axle transmission (5) drives a vehicle axle (7), **characterized in that** the reversing gear (3) is flange-mounted as a separate unit on the axle transmission housing (6) and carries on its output shaft (20) a bevel gear (9) of the axle transmission (5), which bevel gear projects into the axle transmission housing (6).

2. Drive according to claim 1, **characterized in that** the propeller shaft (4) extends past the vehicle axle (7) and is connected to an input shaft (19) of the reversing gear (3), the gearbox (12) of which at the side of the vehicle axle (7) remote from the shift transmission (2) is flange-mounted on a substantially vertical, paraxial interface of the axle transmission housing (6).

3. Drive according to claim 1 or 2, **characterized in that** a first input gearwheel (15) of the reversing gear (3) is supported on a bearing neck (17) of the reversing gearbox (12) and a second input gearwheel (16) of the reversing gear (3) is supported with axial clearance relative to the first on a bearing neck (18) of a housing cover (13) of the reversing gearbox (12), wherein provided between the input gearwheels (15, 16) is a coupling device (23), by means of which in each case one input gearwheel (15, 16) of the reversing gear (3) is couplable to the latter's input shaft (19) and which is actuated by means of an electric, pneumatic or hydraulic shift device (24).

4. Drive according to claim 3, **characterized in that** the shift device (24) is accommodated in the bearing neck (18) of the housing cover (13) or in the bearing neck (17) of the reversing gearbox (12).

5. Drive according to one of claims 3 or 4, **characterized in that** the coupling device (23) is a shift sleeve, which is guided in a non-rotatable but axially displaceable manner on the input shaft (19) and is actuated by a piston, which is guided in a shift cylinder, via a piston rod and a thrust bearing seated on the latter, wherein the piston has a spring-loaded middle position.

6. Drive according to one of the preceding claims, **characterized in that** each shift position is mechanically locked and electrically detected by means of non-touch sensors.

7. Drive according to one of the preceding claims, **characterized in that** the output shaft (20) of the reversing gear (3) is connectable by a propeller shaft (22) to an axle transmission of a further vehicle axle.

## Revendications

1. Entraînement d'engin automoteur comprenant un moteur à combustion interne à pistons alternatifs (1) qui entraîne un essieu de véhicule (7) par l'intermédiaire d'une boîte de vitesses (2), d'un arbre articulé (4) et d'une boîte de renversement de marche (3) pouvant être commandée, agencé sur une transmission d'essieu (5), **caractérisé en ce que** la boîte de renversement de marche (3) est montée, sous la forme d'une unité de construction séparée, sur le carter (6) de la transmission d'essieu par un flasque et porte, sur son arbre de sortie (20), une roue conique (9) de la transmission d'essieu (5) qui pénètre dans le carter (6) de la transmission d'essieu.

2. Entraînement selon la revendication 1, **caractérisé en ce que** l'arbre articulé (4) passe au droit de l'essieu (7) du véhicule et est relié à un arbre d'entrée (19) de la boîte de renversement de marche (3), dont le carter (12) est monté par un flasque sur le côté de l'essieu (7) du véhicule qui est éloigné de la boîte de vitesses (2), contre une surface de séparation sensiblement verticale du carter (6) de la transmission d'essieu qui est parallèle à l'essieu.

3. Entraînement selon la revendication 1 ou 2, **caractérisé en ce qu'**une première roue dentée d'entrée (15) de la boîte de renversement de marche (3) est montée sur une tubulure formant palier (17) du carter (12) de la boîte de renversement de marche et une deuxième roue dentée d'entrée (16) de la boîte de renversement de marche (3), à une certaine distance axiale de la première, sur une tubulure formant palier (18) d'un couvercle (13) du carter (12) de la boîte de renversement de marche, cependant qu'il est prévu, entre les roues dentées d'entrée (15, 16), un dispositif d'embrayage (23) par lequel une roue dentée d'entrée (15, 16) de la boîte de renversement de marche (3) peut être accouplée à l'arbre d'entrée (19) de cette boîte et qui est actionné par un dispositif de commande (24) électrique, pneumatique ou hydraulique.

4. Entraînement selon la revendication 3, **caractérisé en ce que** le dispositif de commande (24) est logé dans la tubulure formant palier (18) du couvercle (13) du carter, ou dans la tubulure formant palier (17) du carter (12) de la boîte de renversement de marche.

5. Entraînement selon l'une des revendications 3 ou 4, **caractérisé en ce que** le dispositif d'embrayage (23) comprend un manchon de commande qui est monté solidairement en rotation mais mobile en translation axiale sur l'arbre d'entrée (19) et qui est actionné par un piston coulissant dans un cylindre de commande, par l'intermédiaire d'une tige de piston et d'un palier axial monté sur cette tige, le piston comportant une position médiane chargée par ressort.

6. Entraînement selon l'une des revendications précédentes, **caractérisé en ce que** chaque position de commande est réglée mécaniquement et détectée électriquement au moyen de capteurs sans contact physique.

7. Entraînement selon l'une des revendications précédentes, **caractérisé en ce que** l'arbre de sortie (20) de la boîte de renversement de marche (3) peut être relié à une transmission d'essieu d'un autre essieu du véhicule par l'intermédiaire d'un arbre articulé (22).
